(19) **Europäisches Patentamt / European Patent Office / Office européen des brevets**

(11) **EP 1 310 446 B1**

(12) **EUROPEAN PATENT SPECIFICATION**

(45) Date of publication and mention
of the grant of the patent:
**13.05.2009 Bulletin 2009/20**

(21) Application number: **02024944.7**

(22) Date of filing: **06.11.2002**

(51) Int Cl.:
**B65H 18/26** *(2006.01)* **B65H 18/28** *(2006.01)*
**B29C 47/16** *(2006.01)*

(54) **Film roll and method for producing a film roll**

Folienrolle und Verfahren zur Herstellung einer Folienrolle

Rouleau de film and procédé de fabriquer un rouleau de film

(84) Designated Contracting States:
**DE FR GB**

(30) Priority: **07.11.2001 JP 2001341771**

(43) Date of publication of application:
**14.05.2003 Bulletin 2003/20**

(73) Proprietor: **TORAY INDUSTRIES, INC.**
**Tokyo 103-8666 (JP)**

(72) Inventors:
• **Takeuchi, Taichiro**
**Mishima-shi,**
**Shizuoka 411-0033 (JP)**
• **Doi, Eiji**
**Anpachi-gun,**
**Gifu 503-2305 (JP)**

(74) Representative: **Kador & Partner**
**Corneliusstrasse 15**
**80469 München (DE)**

(56) References cited:
**EP-A- 0 307 076 WO-A-01/48061**
**US-A- 4 576 344 US-A- 5 059 265**
**US-A- 5 928 580**

• **PATENT ABSTRACTS OF JAPAN vol. 1999, no. 08, 30 June 1999 (1999-06-30) & JP 11 059986 A (ASAHI CHEM IND CO LTD), 2 March 1999 (1999-03-02)**
• **PATENT ABSTRACTS OF JAPAN vol. 0091, no. 83 (M-400), 30 July 1985 (1985-07-30) & JP 60 049912 A (TORAY KK), 19 March 1985 (1985-03-19)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to film rolls prepared by winding thin films onto a core. In particular, the present invention relates to a film roll wound around a core, in which the hardness distribution measured at ten points across the width of the film on the roll is controlled within a specific range, in order to prevent deterioration of flatness. The control of the hardness distribution within the specific range suppresses stress generated between film layers across the roll width during storing at high temperatures or heat treatment within a predetermined range, and prevents stress concentration localized in the center of the film during the treatment.

2. Description of the Related Art

When a relatively thin film of 20 $\mu$m or less is wound into a mill roll, the rolled film exhibits deterioration of flatness, i.e., cratering and waving. It is known to reduce the variation in hardness of the roll in order to prevent deterioration of film flatness due to a change in size of the film during absorption and dehumidification (for example, Japanese Unexamined Patent Application Publication No. 11-59986). This publication, however, does not disclose that the hardness in the center is intentionally set to be higher than that at the edges so as to prevent deterioration of flatness in high-temperature environments in a film processing step and a distribution step of a film roll.

It is also known that the outside diameter at the center position of the film roll is set to be larger than that at both edge positions to prevent wrinkles due to movement of air between film layers at high-temperature environments (for example, Japanese Unexamined Patent Application Publication No. 2000-1246). An excessively large circumferential length, however, generates large residual stress in the rolled film that results in deterioration of the flatness at ordinary temperature, as well as high temperature.

Furthermore, it is known to control the maximum peak and the maximum valley from a base line between the two ends of a curve that is obtained by plotting the diameter across the width of the film roll in order to prevent wrinkle and sag of the film over time (for example, PCT Publication No. WO 01/48061). Since this technology does not take account of the positional relationship across the width, stress concentration at portions having smaller diameters, namely, depressed portions, inevitably causes the deterioration of flatness during storage in high-temperature environments and heat treatment.

Rolled films are stored in various environments in film distribution processes, and the temperature of stock rooms often exceeds 50°C in summer. Furthermore, original rolls of films are preliminarily treated in high-temperature environments exceeding 60°C in order to improve thermal stability of the film.

In the rolled films stored in high-temperature environments, thermal expansion and shrinkage of the film generates interlayer stress (stress between film layers). If the stress is not released, it causes plastic deformation of the film, resulting in deterioration of flatness, i.e., cratering and waving. Rolled films and processed films with deterioration of flatness cannot be used in some cases. If a film roll having poor flatness is used as a base film for a magnetic recording medium, uneven coating of a magnetic layer and a change in width when the tape is slit occur during a magnetic tape production process; thus, resulting in a significant decrease in yield. If a film roll having poor flatness is used in other industrial fields, insufficient coating or deposition on poor flatness portions and a variation in thickness at the deposited portions occur, resulting in deterioration of film characteristics such as electrical characteristics.

In the above known film rolls, prevention of deterioration of flatness due to a change in humidity and of wrinkles in high-temperature environments is intended. However, rolls that do not exhibit deterioration of flatness at high-temperature environments have not been developed yet.

SUMMARY OF THE INVENTION

An object of the present invention is to provide a film roll that is barely exhibits deterioration of flatness during storage and heat treatment in high temperature environments.

According to an aspect of the present invention, a film roll is characterized in that roll hardnesses H1 to H10 measured at ten points across the width of the roll satisfy relationship (1):

$$0 < (-4 \times H1) + H2 + H3 + H4 + H5 + H6 + H7 + H8 + H9 + (-4 \times H10) \leq 6 \qquad (1)$$

According to another aspect of the present invention, a film roll is characterized in that roll hardnesses H1 to H10 measured at ten points across the width of the roll satisfy relationship (2):

$$0 < -H1-H2-H3+H4+(2\times H5)+(2\times H6)+H7-H8-H9-H10 \leq 5 \qquad (2)$$

In this aspect, the roll hardnesses H1 to H10 preferably further satisfy relationship (1):

$$0 < (-4\times H1)+H2+H3+H4+H5+H6+H7+H8+H9+(-4\times H10) \leq 6 \qquad (1)$$

In the film roll according to the present invention, the film preferably has a thickness of 10 $\mu$m or less. The film may comprise a polyester resin. Alternatively, the film may comprise a polyamide resin. Preferably, the film is a base film for a magnetic recording medium.

The film roll according to the present invention does not exhibit stress concentration due to thermal expansion and shrinkage during high-temperature treatment and thus exhibits satisfactory film flatness even if the film is thin.

BRIEF DESCRIPTION OF THE DRAWINGS

Fig. 1(a),(b) are schematic views illustrating the concept of hardness measurement of a film roll according to the present invention; and

Fig. 2(a),(b),(c) are schematic views illustrating control of the film thickness for controlling the hardness distribution of a film roll according to the present invention.

DESCRIPTION OF THE PREFERRED EMBODIMENTS

A film roll according to the present invention is prepared by winding a film around a core for winding. The width and length of the film are not limited in the present invention; however, a film roll having a width of less than 300 mm exhibits low productivity (processible volume per unit time). In another view of improving handling of the film roll, the range of width of the roll is preferably 8 mm to 3,000 mm, more preferably 12.7 mm to 2,000 mm, and more preferably 100 mm to 1,500 mm. A film roll having a length of less than 1,000 m generates relatively low interlayer stress due to a reduced number of wound layers and barely undergoes deterioration of flatness. A film roll having a width exceeding 6,000 mm is decentered by its own weight, and may impair some of the advantages according to the present invention. A film roll having a length exceeding 100,000 m has significantly large interlayer stress due to its own weight and a large number of wound layers, and may impair some of the advantages according to the present invention. Preferably the range of film length is 1,000 m to 50,000 m, more preferably 1,500 m to 40,000 m, and more preferably 3,000 m to 30,000 m for improving handling of the film roll. Preferably the range of diameter of the core is 75 mm to 380 mm, and more preferably 150 mm to 254 mm for improving handling of the film roll.

In the film roll according to the present invention, roll hardnesses(degree) H1 to H10 that are measured at ten points across the width of the roll satisfy relationship (1) and/or relationship (2):

$$0 < (-4\times H1)+H2+H3+H4+H5+H6+H7+H8+H9+(-4\times H10) \leq 6 \qquad (1)$$

$$0 < -H1-H2-H3+H4+(2\times H5)+(2\times H6)+H7-H8-H9-H10 \leq 5 \qquad (2)$$

Hereinafter, $(-4\times H1)+H2+H3+H4+H5+H6+H7+H8+H9+(-4\times H10)$ is represented by Formula I and $-H1-H2-H3+H4+(2\times H5)+(2\times H6)+H7-H8-H9-H10$ is represented by Formula II. Preferably, the roll hardnesses H1 to H10 satisfy both relationships (1) and (2). The advantages of the present invention are noticeable when $0.3 \leq$ Formula I $\leq 6$ and more noticeable when $0.6 \leq$ Formula II $\leq 6$. Also, the advantages of the present invention are noticeable when $0.3 \leq$ Formula II $\leq 5$ and more noticeable when $0.6 \leq$ Formula II $\leq 5$.

Formula (I) has a positive value when the hardnesses of the two ends (H1 and H10) are lower than those at the inner points (H2 to H9). Since the hardness is lower at the ends than at the inner points, stress generated at high-temperature environments can be released toward these two ends. Thus, the film roll can maintain satisfactory flatness. Formula (I) represents the total of differences in hardness between inner points and the nearer end, as follows:

$$\text{Formula (I)} = (H2-H1) + (H3-H1) + (H4-H1) + (H5-H1) +$$
$$(H6-H10) + (H7-H10) + (H8-H10) + (H9-H10)$$

When all the hardnesses are the same, the value of Formula (I) becomes zero.

Formula (II) has a positive value when the hardness is higher at the four inner points than at the six outer points near the edges (three points at the left edge and three points at the right edge). When Formula (II) has a positive value, in other words, when the hardness in the center is higher than that at the peripheries, the stress can be released from the center towards the edges, and deterioration of the flatness does not occur in the center. Formula (II) represents the total of differences in hardness between inner points and outer points remote by three points from the inner points, namely, the total of gradients of hardness, as follows:

$$\text{Formula (II)} = (H4-H1) + (H5-H2) + (H6-H3) + (H5-H8) +$$
$$(H6-H9) + (H7-H10)$$

If both Formulae (I) and (II) have negative values, stress toward the center having lower hardness occurs during storage at high-temperature environments and heat treatment. Thus, the film roll undergoes deterioration of flatness due to localized stress concentration from the two ends toward the center.

When the value of Formula (I) exceeds 6, the film roll undergoes deterioration of flatness at ordinary temperature and exhibits unstable roll formation. The value of Formula (I) is preferably 5.5 or less and more preferably 4.5 or less in view of industrial productivity. When the value of Formula (II) exceeds 5, the film roll undergoes deterioration of flatness at ordinary temperature and exhibits unstable roll formation. The value of Formula (II) is preferably 4.5 or less and more preferably 4 or less in view of industrial productivity.

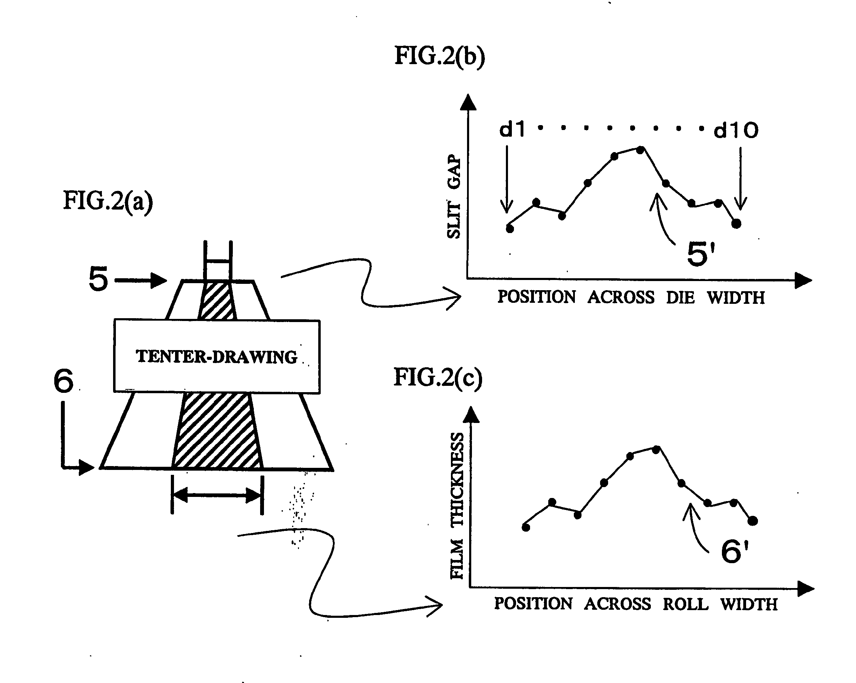

The method for controlling the hardness distribution of the film roll so that Formulae (I) and (II) satisfy the above ranges is not limited. A relatively simple method is to control the thickness across the width during production of the film and finally to control the thickness across the width of the film roll. However, such control is not achieved by known processes. In the present invention, for example, resin is extruded from a slit die while the gap of the slit die is being controlled so as to satisfy the following relationships (3) and (4). Relationships (1) and (2) above are thereby satisfied. Fig. 2 is a schematic view illustrating such control. The gap distribution 5' of the slit die is adjusted so as to control the thickness of a nonoriented film 5 discharged from the die. The thickness distribution 6' across the width of the original film corresponds to the gap distribution 5' of the slit die.

$$(-4 \times d1) + d2 + d3 + d4 + d5 + d6 + d7 + d8 + d9 + (-4 \times d10) > 0 \qquad (3)$$

$$-d1 - d2 - d3 + d4 + (2 \times d5) + (2 \times d6) + d7 - d8 - d9 - d10 > 0 \qquad (4)$$

wherein d1 to d10 are gaps (mm) of the slit die provided at the resin discharge section. These ten gaps correspond to the ten points across the width of the film wound into the roll.

In the present invention, the film preferably has a thickness of 10 $\mu$m or less, and more preferably 8 $\mu$m or less. When the film is used as a magnetic tape, a thickness exceeding 10 $\mu$m limits the length of a tape that can be contained in a cassette, resulting in reduced recording hours and capacities. In another view of improving handling of the film roll, the range of film thickness is preferably 2 $\mu$m to 50 $\mu$m, more preferably 3 $\mu$m to 25 $\mu$m, and more preferably 4 $\mu$m to 15 $\mu$m.

The film roll according to the present invention is advantageous in a magnetic recording medium having the following specifications; a thin magnetic layer, a short recording wavelength, and a higher density. In such a case, the deterioration of the flatness adversely affects the coating of a magnetic layer on the tape. The advantages according to the present invention are noticeable in magnetic tapes for data recording and magnetic tapes for image recording (such as tapes for digital β-cam and DVC (digital videocassettes). The film roll of the present invention is particularly advantageous for magnetic tapes that record large amounts of information such as high-vision images.

The film roll of the present invention is also advantageous for magnetic tapes that are adversely affected by a change in width caused by slitting the film, for example, a magnetic tape that must be provided with servo signals and servo marks. Typical examples of such magnetic tapes are linear recording types, i.e., digital linear tape (DLT) and linear tape open (LTO).

The film according to the present invention may be a laminate of two or more layers. The lamination method is not limited in the present invention. A typical method for preparing a laminate film is coextrusion of melted resins. A base film for a magnetic recording medium preferably has different surfaces, i.e., a flat surface and a slidable surface for improving high-speed winding characteristics from a slitter.

The core for winding according to the present invention is not limited, and its surface roughness (center average roughness Ra) is preferably 0.5 $\mu$m or less and more preferably 0.2 $\mu$m or less. The surface roughness of the core is transferred to the surface of the wound film. If the film is used as a base film of a magnetic recording medium, a surface roughness of the core exceeding 0.5 $\mu$m may cause significant deterioration of electromagnetic conversion characteristics of the magnetic recording medium. The method for controlling the center average surface roughness Ra of the core for winding is not limited in the present invention. A desired surface roughness is achieved by using a hard resin such as epoxy resin on the core surface and by polishing the surface. A combination of lapping and fine polishing is preferred to achieve a desired surface roughness.

The core for winding preferably has an axial modulus (Ya) of at least 9.8 GPa and more preferably at least 14 GPa. A lower modulus may cause deformation of the core by the tension and contact pressure applied during winding of the film. Furthermore, the core for winding preferably has a radial modulus (Yr) of at least 9.8 GPa and more preferably at least 14 GPa. A core for winding not having the above moduli will be deformed during winding of the film. The above mechanical strength of the core can be controlled by any method. For example, the strength of a core formed of a fiber-reinforced plastic is controlled by changing the content of carbon fiber or glass fiber in the base material and/or changing the thickness of the base material.

The core for winding according to the present invention may be composed of any material, preferably having a high mechanical strength. Examples of such materials include fiber-reinforced plastic, aluminum, and iron. In particular. lightweight fiber-reinforced plastic is preferable in view of easy handling.

The film constituting the film roll according to the present invention may be composed of any resin. Examples of resins include polyester resins, polyamide resins, polyolefin resins, polyphenylene sulfide resins, polyimide resins, and polyetherimide resins. The film according to the present invention may be composed of at least two resins or a copolymer to improve the strength. The film is preferably composed of a polyester resin or a polyamide resin to achieve satisfactory flatness of the film roll. More preferably, the polyester resin has a main structural unit selected from the group consisting of ethylene terephthalate, ethylene $\alpha,\beta$-bis(2-chlorophenoxy)ethane-4,4'-dicarboxylate, and ethylene 2,6-naphthalate. More preferably the polyamide resin is primarily composed of para-substituted aromatic polyamide.

The film preferably contains lubricants, such as inert particulate lubricants. Examples of particulate lubricants include colloidal silica, calcium carbonate, titanium dioxide, alumina, aluminum silicate, crosslinked polystyrene, and silicone.

The particulate lubricant may be added to the resin in any step before melt extrusion, for example, before, during, or after polymerization of the resin polymer, or in a preliminary step for the melt extrusion. The particulate lubricant may be added to the resin by any process. When the lubricant is added to a polyester resin, preferably the particulate lubricant is dispersed into ethylene glycol (diol component) and then the ethylene glycol is polymerized with a predetermined dicarboxylic acid component. Preferably, aqueous sol or alcoholic sol prepared by synthesis of the particulate lubricant is added without drying. Such sol is well dispersed in the resin matrix, improving electromagnetic conversion characteristics of the film. Alternatively, aqueous particulate slurry may be directly mixed with polyester pellets and the mixture kneaded in a bent-type twin-screw extruder. For example, the resin content is adjusted as follows: A master batch of high-content particles is preliminarily prepared by the above process and is diluted into polyester that substantially does not contain the particles.

The film according to the present invention may contain any different polymer in order to improve mechanical strength, and may contain organic additives such as an antioxidant, a thermal stabilizer, a light-shielding agent, and an antistatic agent.

A method for making the film roll will now be described. There are two winding modes for winding the film into a roll: a center winding mode for winding the film by a rotating axis drive provided in the winding center, and a surface winding mode involving a surface drive. The surface winding mode, which can control the contact pressure during winding, is preferable in the present invention, although the center-winding mode can also be employed. In view of appearance of the film roll, the following conditions are preferable; a winding tension of 7 to 12 kg/m, a winding contact pressure of 30 to 60 kg/m, and a winding rate of 100 to 200 m/minute. When a film having a width of 1 m and a length of 10,000 m is wound, the following conditions are preferable in view of preventing wrinkles that occurs over time; a winding tension of 8 to 11 kg/m, a winding contact pressure of 40 to 60 kg/m, and a winding rate of 130 to 180 m/minutes.

Measurements of Physical Properties and Evaluations of Effects

(1) Hardness of Film Roll

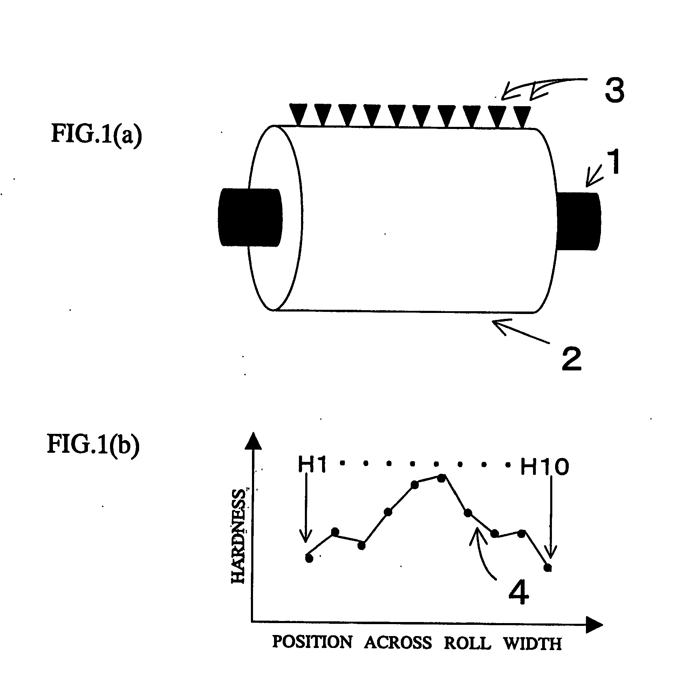

Referring to Fig. 1, the roll width of a film roll 2 wound around a core 1 is equally divided into ten segments, and the hardness (degree) is measured to the first decimal place at the center of each segment at a pressure load of 1 kg using a Shimadzu rubber hardness meter type 200 (made by Shimadzu Corporation) according to JIS-K-6301-1975 (the spring hardness test type A). The hardness is measured three times at each center. An example of the hardness distribution 4 is shown in Fig. 1.

(2) Film Thickness

Ten test pieces with a length of about 100mm are prepared from the full width of film roll and are stacked. The thickness of the stacked films is measured at the ten points with a micrometer according to JIS B7502, and the average thickness divided by 10 is defined as the film thickness.

(3) Surface Roughness Ra of Core

The center average roughnesses are measured at three points at a cutoff of 0.25 mm with a surface roughness meter SURFCOM 111A made by Tokyo Seimitsu Co., Ltd. according to JIS-B-0601, and the average is defined as the surface roughness Ra.

(4) Axis Modulus Ya of Core

A core with an outer diameter of 167 mm, an inner diameter of 152.5 mm, and a length of 1,200 mm is supported such that the distance between supporting points is 900 mm. A load is applied to the center of the core, and the axis modulus Ya is determined from a deflection-to-load ratio.

(5) Radial Modulus Yr of Core for Winding

A core with an outer diameter of 167 mm, an inner diameter of 152.5 mm, and a length of 50 mm is placed between two flat plates. A load is applied to the center of the core, and the radial modulus Yr is determined from a deflection-to-load ratio:

$$Yr = (0.149gP \cdot r^3)/(\delta \cdot I)$$

$$I = L \cdot h^3/12$$

wherein g is gravitational acceleration ($m \cdot s^{-2}$), P is load (kg), r is central radius of the core(mm), $\delta$ is deflection (mm), L is length of the core (mm), and h is thickness of the core (mm).

(6) Evaluation of Deterioration of Flatness during High-Temperature Treatment

A film roll is allowed to stand at a temperature of 70°C and a relative humidity of 65% for 3 days, and is placed in an environment at a temperature of 25°C and a humidity of 65% for 6 hours. One turn of film is released from the film roll, and free tension (the film is vertically suspended by its own weight) or an appropriate tension is applied to observe deterioration of flatness, i.e., cratering and waving caused by the high-temperature treatment. The deterioration of flatness is visually observed and evaluated according to the following criteria:

S: No deterioration of flatness is observed by free tension.
A: Slight deterioration of flatness is observed by free tension, but disappears by a tension of 1 kg/m.

B: Deterioration of flatness is observed by free tension, but disappears by a tension of 3 kg/m.

C: Deterioration of flatness is observed by free tension, and by a tension of 3 kg/m.

Ranks S and A are satisfactory levels.

EXAMPLES

EXAMPLES 1 to 3

Polyethylene terephthalate A containing 0.15 weight percent crosslinked divinylbenzene-styrene copolymer particles having an average particle diameter of 0.3 $\mu$m and 0.01 weight percent crosslinked divinylbenzene-styrene copolymer particles having an average particle diameter of 0.8 $\mu$m was prepared. Also polyethylene terephthalate B containing 0.1 weight percent crosslinked divinylbenzene-styrene copolymer particles having an average particle diameter of 0.3 $\mu$m was prepared. These were melt-extruded from two extruders at 290°C, were finely filtered, and coextruded through a rectangular feed block. The co-extrudate went through a slit die and then that was wound around a cooling roller at a surface temperature of 25°C by the method of the casting with static-charge to prepare an unstretched laminate film. The unstretched double-layer film was drawn to 3.5 times at 122°C in the longitudinal direction. The uniaxial stretched film was drawn to 3.6 times at 100°C in the width direction with a tenter, was drawn to 1.6 times at 135°C in the longitudinal direction. and was heat-set at 208°C for 3 seconds at a fixed length to prepare a biaxial stretched film having a thickness of 6.0 $\mu$m.

In the above process, the slit gaps of the slit die were adjusted so that relationships (3) and (4) are satisfied. The slit gaps d1 to d10 are shown in Table 2.

This original film was wound around a fiber-reinforced plastic core A (FWP-10 made by Tenryu Kogyo K.K.) at a winding tension of 9 kg/m, a winding contact pressure of 52 kg/m, and a winding rate of 150 m/min using a slitter of a surface center winding type to prepare a film roll with a width of 1 m and a length of 9,000 m.

EXAMPLE 4

A film roll was prepared as in EXAMPLE 1 except that the film thickness was 9.7 $\mu$m and the slit gaps d1 to 10 were changed as shown in Table 2.

EXAMPLE 5

A film roll was prepared as in EXAMPLE 4 except that the slit gaps d1 to 10 were adjusted such that only relationship (3) was satisfied.

EXAMPLE 6

A film roll was prepared as in EXAMPLE 1 except that the slit gaps d1 to 10 were adjusted such that only relationship (4) was satisfied.

EXAMPLE 7

Into N-methyl-2-pyrollidone, 85 molar percent 2-chloroparaphenylenediamine and 15 molar percent 4,4'-diaminodiphenyl ether as aromatic diamine components were dissolved, and 99 molar percent 2-chloroterephthaloyl chloride was added thereto. Colloidal silica having a diameter of 45 nm was added in an amount of 0.2 weight percent of the monomers, and the mixture was stirred for polymerization. The product was neutralized with lithium hydroxide to prepare an aromatic polyamide solution having a polymer content of 10 weight percent and an intrinsic viscosity of 2.6. The aromatic polyamide solution was cast on a stainless steel endless belt and was dried in an atmosphere at 150°C for 5 minutes to form a film. The film was continuously separated from the belt and was continuously immersed in a water vessel at 20°C for about 10 minutes to extract the residual solvent and the resultant inorganic salt while the film was being drawn to 1.05 times in the longitudinal direction. The film was drawn to 1.1 times in the width direction at 300°C with a tenter to prepare an original film having a thickness of 4.0 $\mu$m. In the above process, the slit gaps of the slit die were adjusted such that both relationships (3) and (4) were satisfied.

This original film was wound around a fiber-reinforced plastic core B (FWP-02 made by Tenryu Kogyo K.K.) at a winding tension of 7 kg/m, a winding contact pressure of 30 kg/m, and a winding rate of 70 m/min using a slitter of a surface center winding type to prepare a film roll with a width of 1 m and a length of 5,000 m.

COMPARATIVE EXAMPLES 1 to 3

Film rolls were prepared as in EXAMPLE 1 except that the slit gaps d1 to d10 were adjusted such that the left sides value of relationships (3) and (4) had negative.

COMPARATIVE EXAMPLE 4

A film roll was prepared as in COMPARATIVE EXAMPLES 1 to 3 except that the slit gaps d1 to d10 were changed as shown in Table 2 and the fiber-reinforced plastic core B was used.

COMPARATIVE EXAMPLE 5

A film roll was prepared as in EXAMPLE 1 except that a paper core (MA core made by Showa Marutsutsu Company Ltd.) was used in place of the fiber-reinforced plastic core.

COMPARATIVE EXAMPLES 6 and 7

Film rolls were prepared as in EXAMPLES 1 to 3 except that the slit gaps d1 to d10 were changed as shown in Table 2.
In the roll formation of COMPARATIVE EXAMPLE 6, irregularity at roll sides was observed. The deterioration of the flatness of COMPARATIVE EXAMPLE 7 was unsatisfactory level B.
Table 1 shows the physical properties of each film and each core, the values of Formulae (1) and (2) of each film, and the results of deterioration of flatness after the high-temperature treatment.
The film rolls of EXAMPLES 1 to 7 according to the present invention showed satisfactory flatness after the high-temperature treatment, whereas the film rolls of COMPARATIVE EXAMPLES 1 to 7 showed deterioration of flatness after the high-temperature treatment.

**Claims**

1.  A film roll comprising a core and a film which is wound onto the core, **characterized in that** roll hardnesses H1 to H10 measured at the center of ten equal segments across the width of the roll at a pressure load of 1kg using a shimadzu rubber hardness meter type 200 according to JIS-K-6301-1975 satisfy relationship (1):

$$0 < (-4 \times H1) + H2 + H3 + H4 + H5 + H6 + H7 + H8 + H9 + (-4 \times H10) \leq 6 \qquad (1)$$

2.  A film roll comprising a core and a film which is wound onto the core, **characterized in that** roll hardnesses H1 to H10 measured at the center of ten equal segments across the width of the roll at a pressure load of 1kg using a shimadzu rubber hardness meter type 200 according to JIS-K-6301-1975 satisfy relationship (2):

$$0 < -H1 - H2 - H3 + H4 + (2 \times H5) + (2 \times H6) + H7 - H8 - H9 - H10 \leq 5 \qquad (2)$$

3.  The film roll according to claim 2, wherein the roll hardnesses H1 to H10 further satisfy relationship (1):

$$0 < (-4 \times H1) + H2 + H3 + H4 + H5 + H6 + H7 + H8 + H9 + (-4 \times H10) \leq 6 \qquad (1)$$

4.  The film roll according to any one of claims 1 to 3, wherein the film has a thickness of 10 $\mu$m or less.

5.  The film roll according to any one of claims 1 to 3, wherein the film comprises a polyester resin.

6.  The film roll according to any one of claims 1 to 3, wherein the film comprises a polyamide resin.

7. The film roll according to any one of claims 1 to 3, wherein the film is a base film for a magnetic recording medium.

8. A method for producing a film roll according to any of claims 1, to 7, which does not exhibit a deterioration of flatness, said film roll being a core having a film wound thereon said method comprising extruding a resin through a slit die having a gap across the width thereof that satisfies the following relationships (3) and (4):

$$(-4xd1) +d2+d3+d4+d5+d6+d7+d8+d9+(-4xd10) \quad >0 \quad (3)$$

$$-d1-d2-d3+d4+(2xd5)+(2xd6)+d7-d8-d9-d10 \quad > 0 \quad (4)$$

where d1 to d10 are gaps of the slit die measured at the midpoint of ten segments along the length of the slit die obtained by dividing the length of the slit die into ten equal segments, to obtain an unstretched film subjecting the film to biaxial stretching to obtain a stretched film, and winding the stretched film onto the core.

**Patentansprüche**

1. Folienrolle, umfassend einen Kern und eine Folie, die auf den Kern aufgewickelt ist, **dadurch gekennzeichnet, daß** die Härte der Rolle H1 bis H10 die in der Mitte von zehn gleichen Segmenten entlang der Breite der Rolle bei einer Druckbelastung von 1 kg und Verwendung eines Shimadzu-Gummihärtemeßgerätes, Typ 200, gemäß JIS-K-6301-1975 gemessen wurde, folgenden Zusammenhang (1) aufweist:

$$0 < (-4xH1)+H2+H3+H4+H5+H6+H7+H8+H9+(-4xH10) \leq 6 \quad (1)$$

2. Folienrolle, umfassend einen Kern und eine Folie, die auf den Kern aufgewickelt ist, **dadurch gekennzeichnet, daß** die Härte der Rolle H1 bis H10 die in der Mitte von zehn gleichen Segmenten entlang der Breite der Rolle bei einer Druckbelastung von 1 kg und Verwendung eines Shimadzu-Gummihärtemeßgerätes, Typ 200, gemäß JIS-K-6301-1975 gemessen wurde, folgenden Zusammenhang (2) aufweist:

$$0 < -H1-H2-H3+H4+(2xH5)+(2xH6)+H7-H8-H9-H10 \leq 5 \quad (2)$$

3. Folienrolle nach Anspruch 2, wobei die Härte der Rolle H1 bis H10 ferner folgenden Zusammenhang (1) aufweist:

$$0 < (-4xH1)+H2+H3+H4+H5+H6+H7+H8+H9+(-4xH10) \leq 6 \quad (1)$$

4. Folienrolle nach einem der Ansprüche 1 bis 3, wobei die Folie eine Dicke von 10 $\mu$m oder weniger aufweist.

5. Folienrolle nach einem der Ansprüche 1 bis 3, wobei die Folie ein Polyesterharz aufweist.

6. Folienrolle nach einem der Ansprüche 1 bis 3, wobei die Folie ein Polyamidharz aufweist.

7. Folienrolle nach einem der Ansprüche 1 bis 3, wobei die Folie eine Trägerfolie für ein Magnetaufzeichnungsmedium ist.

8. Verfahren zum Herstellen einer Folienrollen nach einem der Ansprüche 1 bis 7, die keine Beeinträchtigung der Flachheit aufweist, wobei die Folienrolle ein Kern mit einer darauf aufgewickelten Folie ist, wobei das Verfahren folgendes umfaßt:

Extrudieren eines Harzes durch eine Schlitzdüse mit einem Spalt entlang ihrer Breite, der die folgenden Zusammenhänge (3) und (4) aufweist:

$$(-4 \times d1) + d2 + d3 + d4 + d5 + d6 + d7 + d8 + d9 + (-4 \times d10) > 0 \qquad (3)$$

$$-d1 - d2 - d3 + d4 + (2 \times d5) + (2 \times d6) + d7 - d8 - d9 - d10 > 0 \qquad (4)$$

wobei d1 bis d10 jeweils der Spalt der Schlitzdüse ist, der im Mittelpunkt von zehn Segmenten entlang der Länge der Schlitzdüse gemessen wird, die durch Teilen der Länge der Schlitzdüse in zehn gleiche Segmente erhalten werden, so daß eine ungereckte Folie erhalten wird;
biaxiales Recken der Folie, so daß eine gereckte Folie erhalten wird, und Aufwickeln der gereckten Folie auf den Kern.

**Revendications**

1.  Rouleau de film comprenant une âme et un film qui est enroulé sur l'âme, **caractérisé en ce que** les duretés H1 à H10 du rouleau mesurées au centre de dix segments égaux en travers de la largeur du rouleau à une charge de pression de 1 kg en utilisant un dispositif de mesure de dureté du caoutchouc de Shimadzu de type 200 selon la norme JIS-K-6301-1975 répondent à la relation (1) :

$$0 < (-4 \times H1 + H2 + H3 + H4 + H5 + H6 + H7 + H8 + H9 + (-4 \times H10) \leq 6 \qquad (1)$$

2.  Rouleau de film comprenant une âme et un film qui est enroulé sur l'âme, **caractérisé en ce que** les duretés H1 à H10 du rouleau mesurées au centre de dix segments égaux en travers de la largeur du rouleau à une charge de pression de 1 kg en utilisant un dispositif de mesure de dureté du caoutchouc de Shimadzu de type 200 selon la norme JIS-K-6301-1975 répondent à la relation (2) :

$$0 < -H1 - H2 - H3 + H4 + (2 \times H5) + (2 \times H6) + H7 - H8 - H9 - H10 \leq 5 \qquad (2)$$

3.  Rouleau de film selon la revendication 2, dans lequel les duretés H1 à H10 du rouleau répondent en outre à la relation (1) :

$$0 < (-4 \times H1) + H2 + H3 + H4 + H5 + H6 + H7 + H8 + H9 + (-4 \times H10) \leq 6 \qquad (1)$$

4.  Rouleau de film selon l'une quelconque des revendications 1 à 3, dans lequel le film a une épaisseur de 10 $\mu$m ou moins.

5.  Rouleau de film selon l'une quelconque des revendications 1 à 3, dans lequel le film comprend une résine de polyester.

6.  Rouleau de film selon l'une quelconque des revendications 1 à 3, dans lequel le film comprend une résine de polyamide.

7.  Rouleau de film selon l'une quelconque des revendications 1 à 3, dans lequel le film est un film de base pour un support d'enregistrement magnétique.

8.  Procédé pour produire un rouleau de film selon l'une quelconque des revendications 1 à 7, qui ne présente pas de détérioration de planéité, ledit rouleau de film étant une âme sur lequel un film est enroulé, ledit procédé comprenant l'extrusion d'une résine à travers une filière droite ayant un intervalle en travers de sa largeur qui répond aux relations (3) et (4) qui suivent :

$$(-4 \times d1) + d2 + d3 + d4 + d5 + d6 + d7 + d8 + d9 + (-4 \times d10) > 0 \qquad (3)$$

$$-d1 - d2 - d3 + d4 + (2 \times d5) + (2 \times d6) + d7 - d8 - d9 - d10 > 0 \qquad (4)$$

dans lesquelles d1 à d10 sont des intervalles de la filière droite mesurés au milieu de dix segments sur la longueur de la filière droite obtenue en divisant la longueur de la filière droite en dix segments égaux pour obtenir un film non étiré ; en soumettant le film à un étirage biaxial pour obtenir un film étiré et en enroulant le film étiré sur l'âme.

FIG.1(a)

FIG.1(b)

FIG.2(b)

FIG.2(a)

5 →

TENTER-DRAWING

6

FIG.2(c)

**EP 1 310 446 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11059986 A
- JP 2000001246 A
- WO 0148061 A